# EUROPEAN PATENT APPLICATION

(11) **EP 3 909 426 A1**
(43) Date of publication of application: **17.11.2021**
(21) Application number: 21172675.7
(22) Date of filing: 07.05.2021
(51) Int. Cl.: A01M 1/04

(54) **A LIGHTING BODY FOR ATTRACTING INSECTS AND RELATIVE INSECT TRAP**

(30) Priority: 13.05.2020 IT 202000010915
(71) Applicant: MO-EL S.p.A., 42027 Montecchio Emilia (RE) (IT)
(72) Inventor: NASI, Stefano, 43022 PARMA (IT); SATTA, Daniele, 42124 REGGIO EMILIA (IT)
(74) Representative: Paparo, Aldo

(57) **Abstract**

Lighting body 1 for attracting insects provided with a LED 2 capable of emitting a beam of UV-A rays and a conveyor body 3 capable of intercepting a portion of UV-A rays and channelling them inside it to transform them into wavelength and transform them into coloured visible light.

## Description

The present invention relates to a lighting body for attracting insects and an insect trap provided with at least one lighting body.

In particular, the present invention finds particular application in attracting harmful and pest insects such as for example bugs, flies, mosquitoes and moths.

Harmful and pest insects are generally widespread in the countryside but can also be found in large cities.

There are several reasons that lead insects to infest crops and homes: the search for food, the search for places suitable for reproduction, the search for less rigid temperatures than those of the external environment and more generally the search for shelter.

The increasingly widespread of insects has led the human being to devise various methods and devices for reducing (or eliminating) the insects in places where they are unwanted.

To date, there are different methods for eliminating insects, from insecticides to means for the generation of heat, light, sounds or sexual vibrations that tend to attract these creatures to specific points and then eliminate them.

Nevertheless, some of these methods can be annoying for the human being, if not even harmful.

For example, the use of traps in which the generation of carbon dioxide is provided for attracting insects, by means of propane cylinders, involves high consumption and pollution.

Alternatively, the use of particular pesticides could be harmful to humans or, in the case of pesticides that are not toxic for humans, could generate an unpleasant odour that would add to that generated by some insects such as bugs.

Traps that exploit UV-A light (ultraviolet light of type A) to emit ultraviolet rays having a wavelength comprised between 360 and 365 nm (nanometres) to attract some species of diptera are known. Nonetheless, such traps are designed to attract some species of insects in the immediate vicinity and are not always capable of leading insects to be entrapped or eliminated. For example, an insect that enters a room could be more attracted by a chandelier, or by another broad spectrum or more powerful light source, rather than by one of the mentioned traps, thus making them ineffective or even useless.

In addition, it often happens that an insect trap is effective for one species of insects but not for the others with infestations occurring in environments where the trap is installed even when the latter is active, for example because the trap is effective for flies but ineffective for moths.

The technical task of the present invention is thus to provide a lighting body and an insect trap which are able to overcome the prior-art drawbacks which have emerged.

The object of the present invention is therefore to provide a lighting body and an insect trap capable of attracting insects even from great distances and which have a wider range of action towards the different types of harmful and pest insects.

The specified technical task and the specified objects are substantially achieved by a lighting body for attracting insects and a trap provided with at least one of the lighting bodies, comprising the technical characteristics set forth in one or more of the appended claims. The dependent claims correspond to possible embodiments of the invention.

Further characteristics and advantages of the present invention will become more apparent from the indicative and thus non-limiting description of an embodiment of a lighting body and of an insect trap. Such a description will be set out below with reference to the appended drawings, which are provided solely for illustrative and therefore non-limiting purposes, in which:
- Figure 1 is a schematic sectional representation of the operating principle of a lighting body for attracting insects in a first embodiment of the present invention;
- Figures 2a - 2c represent the lighting body of the first embodiment of Figure 1 in a second variant and in different operating positions.
- Figure 3 represents the lighting body in the first embodiment of Figure 1 in a third variant.
- Figure 4 represents the lighting body in a second embodiment.
- Figure 5 illustrates a diagram of spectrographic detection of the wavelength of the rays emitted by the conveyor body of Figure 4;
- Figures 6-7 represent the lighting body of Figure 4 in a second variant.
- Figure 8 represents the lighting body of Figure 4 in a second variant.
- Figures 9-10 represent the lighting body of Figure 4 in a fourth variant in two respective operating positions.
- Figure 11 represents some components of a trap 10 comprising a plurality of lighting bodies.
- Figure 12 represents a side view of the trap 10.

With reference to the appended figures, 1 indicates a lighting body for attracting insects, in the various variants thereof, while 10 indicates an insect trap provided with at least one lighting body.

The lighting body 1 and consequently the insect trap 10 object of the present invention can be used both in external and internal environments. In other words, the present invention can find application both inside a house (or other internal room such as a commercial establishment), and outside a house (a garden, an orchard, a field or the like).

There is at least one LED 2 capable of emitting a light beam of UV-A rays at the base of the lighting body 1 to attract insects.

The emission beam of the LED 2 has a conical shape with an aperture or emission angle equal to α.

The emission angle α is preferably 120°. The conical beam has an axis of symmetry along a vertical axis Y-Y passing through the vertex of the conical beam, i.e. the axis of symmetry of the LED 2.

The LED 2 can be designed to emit the beam of UV-A rays with other different emission angles α.

Preferably, the beam of light produced by the at least one LED 2 produces ultraviolet rays with a wavelength comprised between 360 nm and 370 nm (represented in some figures with the letter F).

This particular beam of light is able to attract insects that belong to the diptera family (including *musca domestica, fannia canicularis and Calliphora vomitoria,* mosquitoes), lepidoptera (including moths), beetles and others.

Even more preferably, the LED 2 is configured to emit the beam of UV-A rays at a frequency preferably of 365 nm.

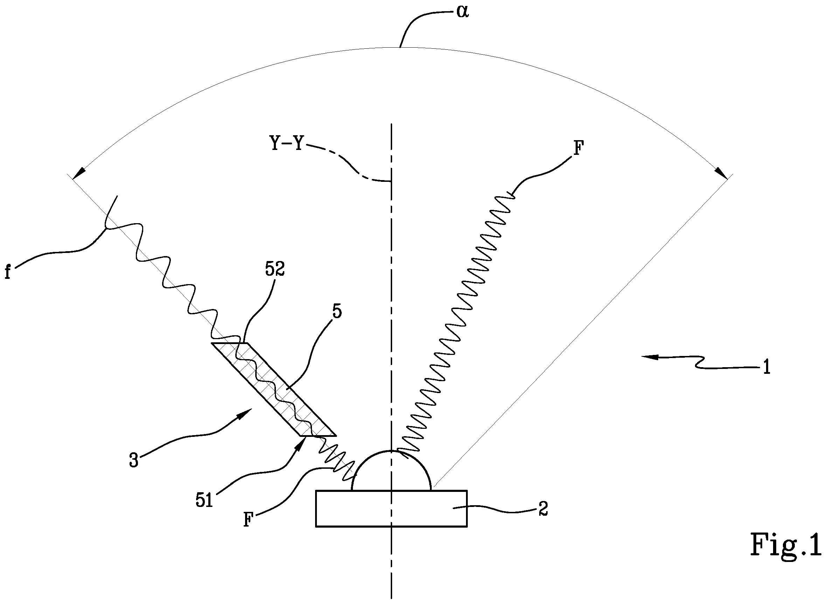

Preferably, the LED 2 emits the beam of UV-A rays continuously. Alternatively, the LED 2 emits the beam of UV-A rays intermittently at regular or irregular intervals so as to attract insects more effectively. Figure 1 schematically shows a first embodiment of the lighting body 1 in which a conveyor body 3 is placed above the LED 2.

Said conveyor body 3 is made of plastic material, preferably polycarbonate, translucent or coloured.

The conveyor body 3 can be fixed in a first position. The conveyor body can be interchangeable by the operator. Finally, the conveyor body can be movable from a first position to a second position with the possibility of assuming, during the movement from the first to the second position, a plurality of operating positions.

In a first embodiment, illustrated in the appended Figures 1, 2a, 2b, 2c, 3, 4, the conveyor body 3 is preferably defined by a bar-shaped body.

The conveyor body 3 of Figure 1 is defined by a first slab-like element 5. Said first element has an entry surface 51 and an exit surface 52.

The entry surface 51 faces the LED 2 and is positioned in such a position as to intercept a portion of UV-A rays emitted by the LED 2.

The exit surface 52 is set away from the LED 2.

The portion of UV-A rays, intercepted by the first element 5, enters, with a wavelength comprised between 360 and 370 nanometres, through the entry surface 51, and is channelled and guided inside the conveyor body 3. The light beam exits from the aforesaid conveyor body 3, in the form of coloured visible light with a wavelength comprised between 380 and 780 nanometres, through the exit surface 52.

In other words, the crossing of the portion of UV-A beams through the first element promotes a transformation of UV rays into coloured visible light with a wavelength change from 360-370 nanometres to 380-780 nanometres.

In Figure 1 the beam of coloured visible light is schematically represented with the letter f.

The first element 5 has been represented with orientation and extension substantially parallel to a generator of the cone of UV-A rays emitted by the LED 2, but the orientation thereof can be of any type (horizontal, vertical and oblique) as long as the condition of the entry surface 51 facing at least a portion of UV-A rays is respected.

The lighting body 1 seen from the front with LED 2 ON will emit a circular source of UV-A rays with a section of coloured visible light. The section of coloured visible light will have an area substantially equal to that of the exit surface.

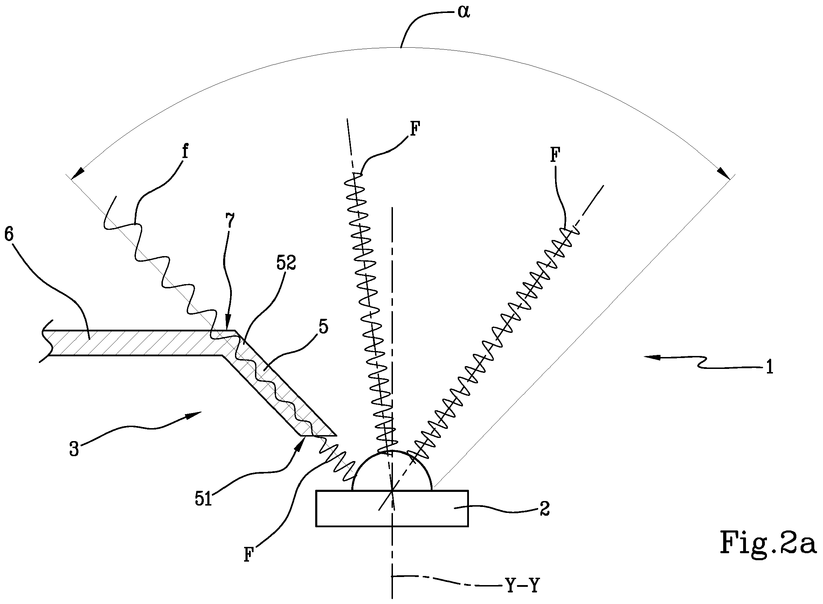

The conveyor body 3 then has a second section 6 connected to the first section 5 and extending the latter (illustrated for example in Figures 2a-2c).

More specifically, the second section 6 extends away from the exit surface 52 with a direction of extension transversal to the axis Y-Y of the beam emitted by the LED 2.

The second section 6, in association with the first section 5, defines a change in inclination 7 from which a beam of coloured visible light with a wavelength comprised between 380 and 780 nanometres exits.

The first and second sections 5,6 are illustrated in Figure 2a in the first position in which the conveyor body 3 intercepts a portion of UV-A rays with the entry surface 51.

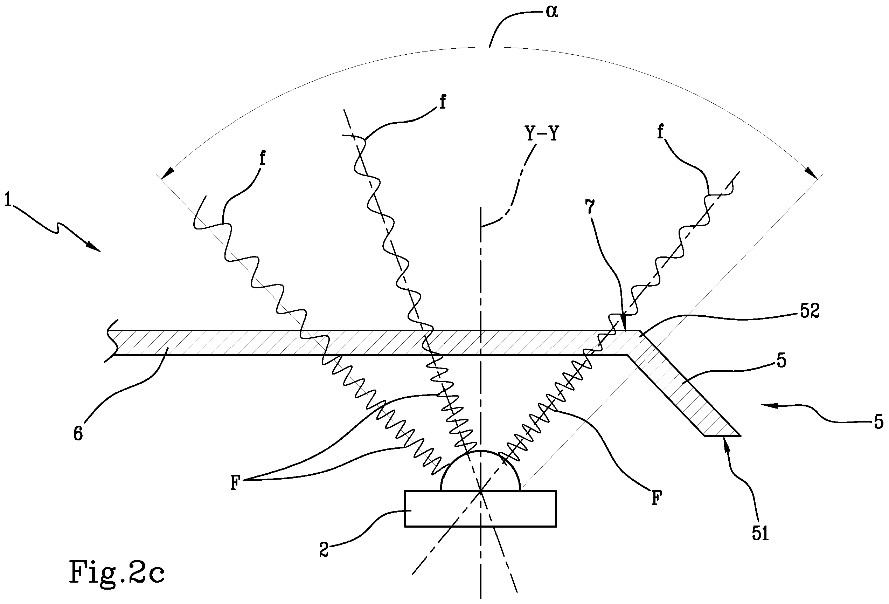

The conveyor body is movable from the first position, illustrated in Figure 2a, to the second position illustrated in Figure 2c.

In the second position, the second section 6 blocks the passage of the beam of UV-A rays, promoting a total conversion of the entering light beam of UV-A rays, transversely to the second section 6, into coloured visible light.

The conveyor body 3 can assume, between the first position and the second position, a plurality of operating positions in which the portion of UV-A rays, transformed into coloured visible light, varies according to the position assumed by the conveyor body 3.

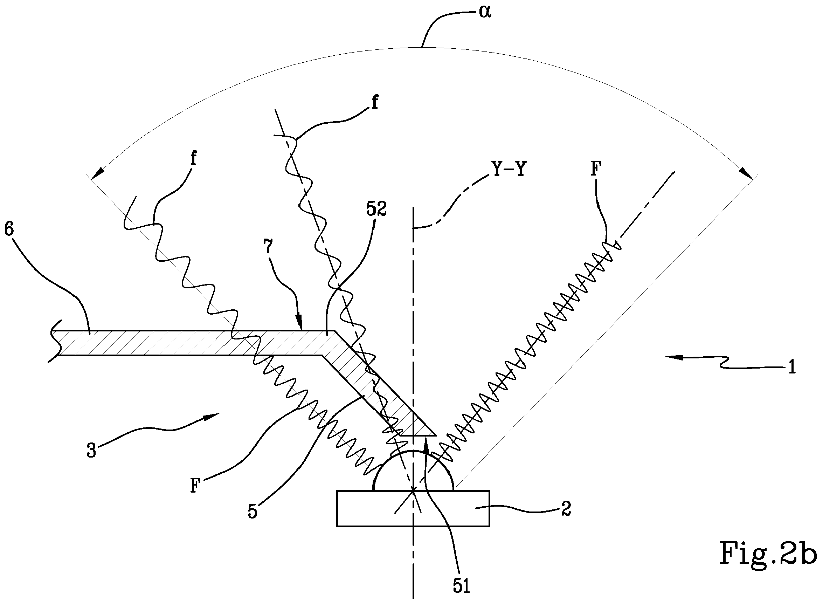

Figure 2b shows the conveyor body 3 in an operating position that is intermediate between the first position and the second position.

The variation in conversion of UV-A rays into coloured visible light varies from a minimum, equal to the cross section of the exit surface 51 of the first element 5 when located in the first position, to a maximum of total conversion of UV-A rays into coloured visible light when the second section 6 completely covers the LED 2.

In the other operating positions the portion of coloured visible light varies proportionally with the portion of the second section 6 which blocks the beam of UV-A rays.

Figure 2b illustrates a partial coverage of the beam of UV-A rays by the first section 6 while Figure 2c illustrates a total coverage of the beam of UV-A rays by the same section.

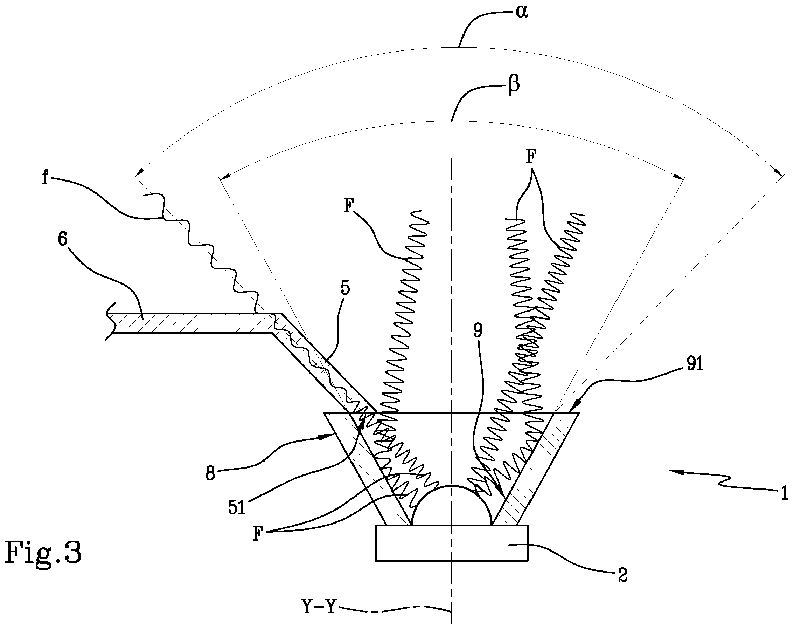

Figure 3 illustrates the lighting body 1 in a third variant which provides, in addition to the LED 2 and the conveyor body 3, a reflecting body 8.

The reflecting body 8, in the preferred form, is defined by a hollow truncated cone body with axis of symmetry coinciding with the axis Y-Y of the beam of UV-A rays emitted by LED 2.

The reflecting body 8 is configured to increase the visibility of the beam of UV-A rays emitted by the LED 2.

Said reflecting body 8 has an aperture angle β that is smaller than the emission angle α and interposed between the LED 2 and conveyor body 3. With this location, the reflecting body 8 reflects a portion of UV-A rays and directs them inside the entry surface 51, while another portion of UV-A rays directs them to the centre of the beam of UV-A rays, increasing the emission intensity.

The reflecting body 8 reflects the UV-A rays as a result of a reflecting surface 9. The positioning of the reflecting body is such that it rests on the base of the LED 2, with the latter placed inside the reflecting body, and with a top 91 of the reflecting surface 9 placed in close vicinity of the entry surface 51 of the conveyor body.

By placing the top 91 close to the entry surface 51, without interfering with the latter, it is possible to move the conveyor body 3 by positioning it in one of the operating positions.

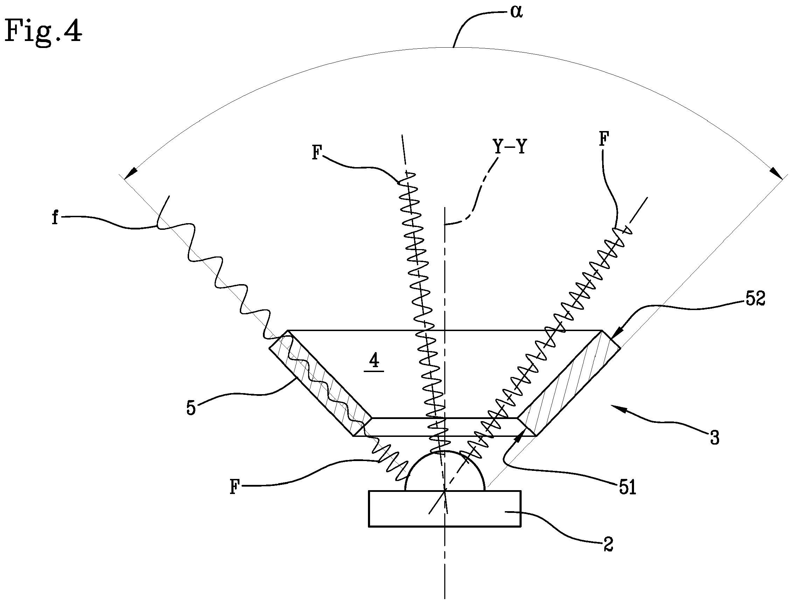

Figures 4, 6, 7, 8, 9, 10 illustrate a second embodiment of the conveyor body 3. In a first variant, illustrated in Figure 4, the conveyor body 3, shown in section, preferably has a hollow truncated cone shape. Alternatively, the conveyor body 3 can have a hollow tubular cylindrical truncated section.

Alternatively, the conveyor body 3 can have any shape provided that, in this embodiment, a constructive geometric condition is respected which includes a hollow central portion 4 and a first section 5 surrounding the hollow central portion.

The conveyor body 3, located above the LED 2, can assume a plurality of positions and in Figure 4 the conveyor body 3 is placed in a first position. The conveyor body 3 comprises a hollow central portion 4 and a first section 5.

The hollow central portion 4 is open at the top and at the bottom and is laterally enclosed by the first section 5.

The conveyor body 3 is placed above the LED 2 so that the central hollow portion 4 is passed through by a first portion of UV-A rays emitted by the LED 2. As is visible in Figure 4, the portion of UV-A rays that passes through the hollow central portion 4 is a central beam of UV-A rays.

The first section 5 is passed through by a second portion of the beam of UV-A rays emitted by the LED 2. Still taking Figure 4 as a reference, the portion of the beam of UV-A rays that passes through the first section is the outermost one, that is, the one furthest away from the vertical axis Y-Y. The first section 5 has a first entry surface 51, facing the LED, and a second exit surface 52 opposed to the previous one.

As is visible from Figure 4, the entry surface 51, as well as the exit surface 52. defines, in the truncated cone extension of the annular body, an annular surface.

If the conveyor body 3 has a hollow truncated cone shape then the outer diameter of the entry surface 51 is smaller than the outer diameter of the exit surface 52.

If the conveyor body 3 has a tubular, hollow cylindrical truncated shape, then the outer diameter of the entry surface 51 is substantially equal to the outer diameter of the exit surface 52.

With reference to the crossing of the beam of UV-A rays along the conveyor body 3, a first portion passes through the hollow central portion 4 unperturbed while the second portion passes through the first section 5 undergoing a transformation.

In particular, the second portion of UV-A rays enters through the entry surface 51, with a wavelength comprised between 360 and 370 nm, and exits, perturbed, with a wavelength comprised between 380 and 780 nm. During the crossing of the first section 5, the UV-A rays change wavelength.

During the crossing of the first section 5, the light emitted by the LED enters, through the surface 51, in the form of UV-A rays and exits, through the surface 52, in the form of coloured visible light.

Figure 4 illustrate, in schematic form, a portion of UV-A rays which, passing through the first section 5, changes in frequency (indicated in the Figure with f). Similarly, Figure 4 also illustrates a portion of UV-A rays which passes through the hollow central portion 4 and does not change frequency (indicated in the Figure with F).

On the outside, the conveyor body 3 can be perceived with a central portion of UV-A rays, having a circular outline in section, and a peripheral portion of coloured visible light that surrounds the central portion of UV-A rays.

UV-A rays generally attract insects belonging to the diptera, lepidoptera and beetles family and the peripheral portion of coloured visible light attracts other types of insects, preferably the Asian bug belonging to the pentatomidae family or other insects in other periods of life and development of the insect or at other times of the day.

In other words, with the beam of UV-A rays most of the insects that are sensitive to this type of rays are attracted and with the coloured visible light an attempt of selecting a type of insect that is much more sensitive, therefore more easily attracted by a coloured light, is made.

To cite another example, it may happen that some insects are not sensitive to UV-A rays during the day but are sensitive thereto at sunset. For these specific types of insects it is possible to improve the attraction with a coloured visible light able to attract them even during the daytime hours.

Again, it can happen that some coloured lights may attract the females (or adult males) of certain insect species. By selecting a conveyor body capable of converting UV-A rays into a specific coloured light, it is possible to make the lighting body more effective by increasing the attractive power thereof towards insects.

Outside the lighting body 1, the beam of light emitted by the LED 2 is perceived as a circle of UV-A rays surrounded by a ring of visible blue, yellow, red or green coloured visible light.

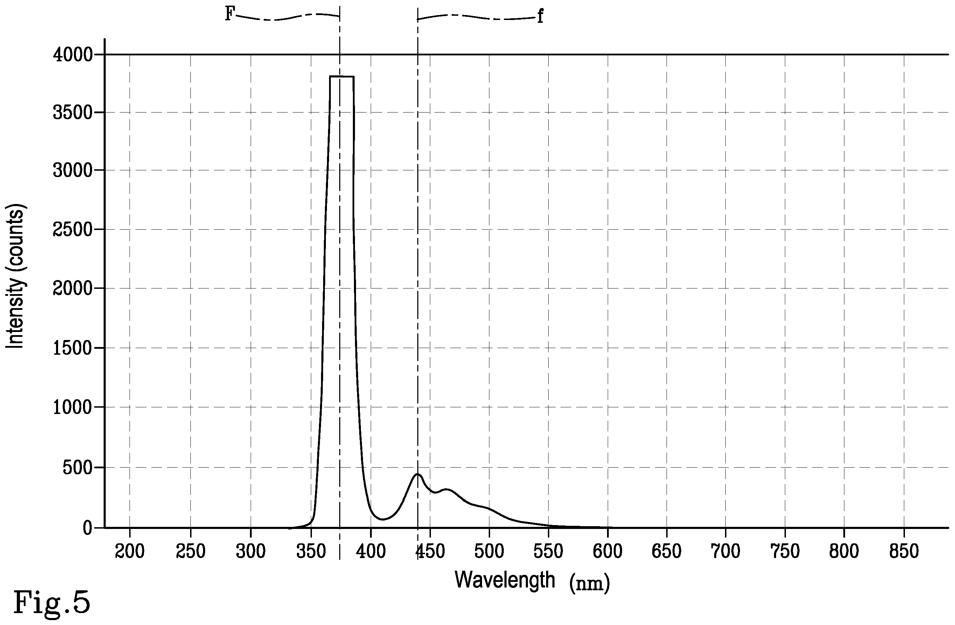

Figure 5 shows a spectrographic detection of the wavelength measured on the conveyor body of Figure 4 obtained with a conveyor made of opacified polycarbonate with only opacifying charge.

The wavelength, expressed in nanometres, is shown on the abscissa, the intensity on the lighting body 1 on the ordinate.

Having positioned the spectrophotometer in front of LED 2 it is possible to notice a first peak (represented in the figure in interrupted form for representative needs) which highlights an emission of a beam of UV-A rays with a wavelength of about 365 nanometres.

By positioning the spectrophotometer in front of the exit surface 52 it is possible to notice a decrease in light intensity, due to the effect of the conveyor body 3, with a wavelength peaking at 430 nm.

The light beam channelled inside the first section 5 passes from a frequency of 365 nanometres, upstream of the entry surface 51, to a frequency of 430 nanometres downstream of the exit surface 52.

During the crossing there is a modification of the wavelength of the UV rays changing the frequency from 360-370 nm, indicated in Figure 4 with the letter F, to 430-440 nm, indicated in the example of Figure 4 with f, depending on the type of material of the conveyor body or pigmented additives applied to the conveyor body.

At the exit surface 52, a light emission surface channelled in the first section 5 is generated which becomes coloured and visible from ultraviolet.

In this way the lighting body is provided with a traditional beam of UV-A rays to attract a large population of insects and with a portion of coloured visible light to attract a specific population of insects or the same population of insects in different periods of life and growth or at different times of the day. All this using a single LED 2.

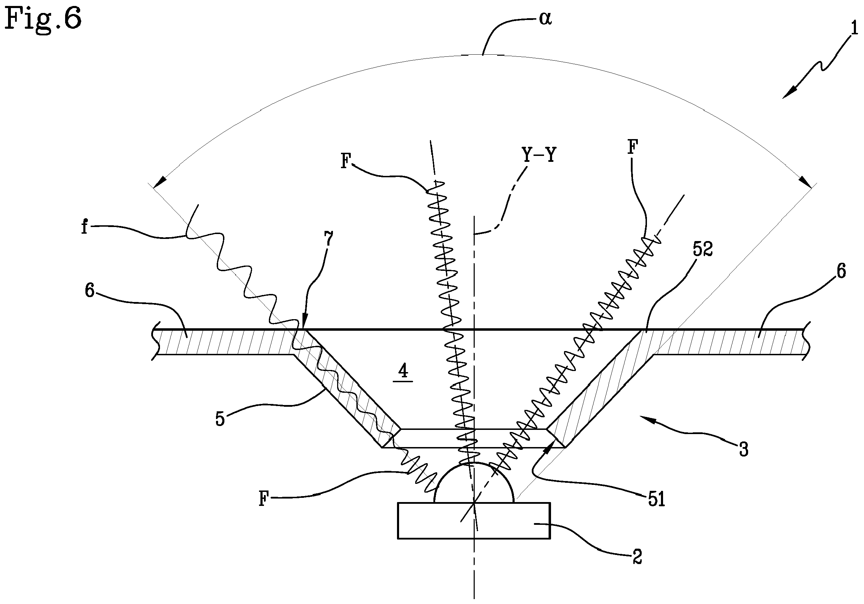

The appended Figures 6, 7, 8, 9 and 10 show the second embodiment of the lighting body 1 in further variants.

These variants share the presence of a second section 6 extending from the first section 5 away therefrom and from the axis of symmetry Y-Y in a direction transverse to that of the axis of symmetry.

In other words, the second section 6 extends from the exit surface 52 and continues, with a direction transverse to the axis of symmetry Y-Y, away from the aforesaid exit surface 52.

Since the exit surface 52 has a circular extension, the conveyor body can have several second sections 6 which extend from corresponding sides of the exit surface 52 of the first section 5 thus assuming an axisymmetrical configuration with respect to the axis of symmetry Y-Y.

The region of intersection of the second section 6 and the exit surface 52 defines a change of inclination 7 on the outside of the conveyor body 3, i.e. in a space opposed to that where the LED 2 is located.

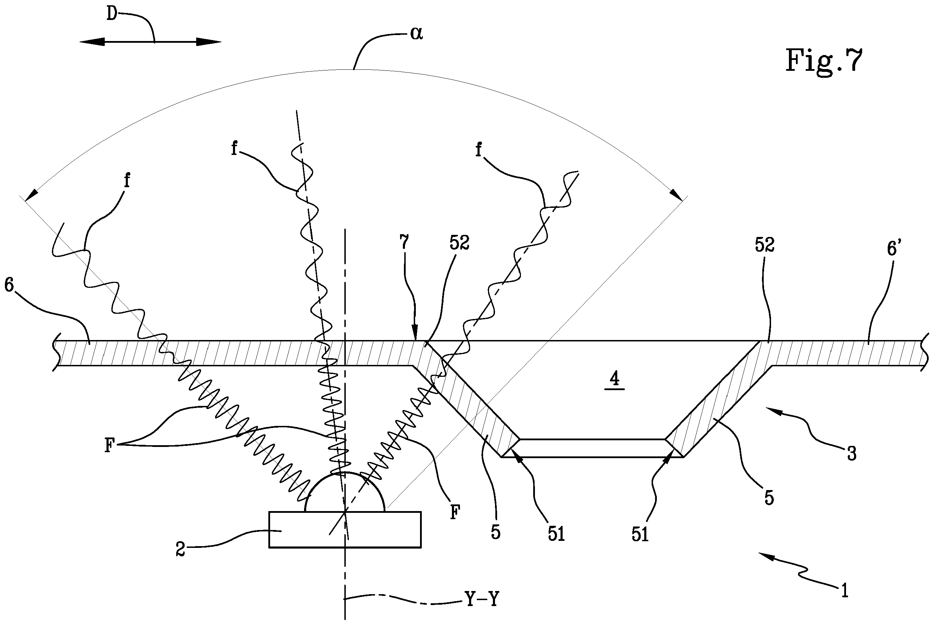

The conveyor body illustrated in Figures 6 and 7 has the possibility of moving, along a direction D, from a first position to a second position with the further possibility of assuming a plurality of operating positions within the two positions.

The conveyor body 3, in Figure 6, is located in a first position.

The conveyor body 3 is movable, under the action of an operator or through motorised means, from a first position to a second position. The first position is the one described in Figure 6. A first portion of the beam of UV-A rays passes through the hollow central portion 4 of the conveyor body 3 and a second portion of the beam of UV-A rays passes through the first section 5 of the conveyor body 3.

In this position, the first portion, the central one, from the beam of UV-A rays passes through the hollow portion 4 of the conveyor body 3 unperturbed, while the second portion, the peripheral one, of the beam of UV-A rays passes through the first section 5 of the conveyor body 3 changing in wavelength. The second portion of UV-A rays channelled through the first section 5 comes out modified in the wavelength through the change of inclination 7. As anticipated in the example of Figure 6, the portion of UV-A rays passes through the hollow central portion 4 and exits it with a wavelength comprised between 360 and 370 nm while the portion of UV-A rays channelled through the first section 5 exits from the change of inclination 7 with a wavelength comprised between 380 and 780 nm. Between the first and second position, the conveyor body 3 can assume a plurality of operating positions in which the portion of coloured visible light, with respect to the UV-A rays, varies proportionally to the portion of the second section 6 which blocks the beam of UV-A rays.

Figure 7 shows the conveyor body 3 in the second position. The conveyor body 3 translates from the first position to the second position as a result of a movement along a direction "D" transversal to the axis of symmetry Y-Y (Figure 7 shows a transverse movement in one direction but given the possible axisymmetrical configuration of the conveyor body 3 it is also possible a movement in a direction opposite to the previous one).

The movement of the conveyor body 3 can take place manually, through the intervention of a user, or in a motorised way by means of a remote control.

This movement can be translational, as illustrated in the appended Figures 6 and 7, but also rotational.

At the second position, the conveyor body 3 completely covers the LED 2. In other words, part of the first section 5 and part of the second section 6 are placed above the LED 2 forming a concave body intercepting the beam of UV-A rays emitted by the LED 2.

As is visible in Figure 7, the displacement of the conveyor body 3 in the second position places the second section 6 above the LED 2 so that the beam of UV-A rays emitted completely crosses the conveyor body 3 in a direction transverse to the latter. In other words, the second section 6, when the conveyor body 3 is located in the second position, is crossed by the beam of UV-A rays emitted by the LED 2. The UV-A rays crossing the second section 6 transversely leave it changing wavelength and passing from a wavelength comprised between 360 and 370 nm, below the second section 6, and a wavelength comprised between 380 and 780 nm, above the second section 6.

When the conveyor 3 is located in the second position, the beam of UV-A rays emitted by the LED 2 is completely converted, at the exit from the second section 6, into coloured visible light.

It is evident that any positioning of the conveyor body 3 in an operating position that is intermediate to the first and second position promotes a partial conversion of UV-A rays into coloured visible light.

It is also possible to vary the intensity of visible light by changing the thicknesses of the conveyor 3.

The lighting body 1 has the advantage of varying the attractive effect of the lighting body according to the location or according to the time band of use of the lighting body.

For example, if the lighting body 1 is used with the conveyor body 3 located in the first position, it is possible to attract a family of insects (or a type of insect), attracted by the beam of UV-A rays with a wavelength comprised between 360 and 370 nanometres, and another family of insects (or another insect), attracted by the coloured visible light with a wavelength comprised between 380 and 780 nm.

In this configuration, the lighting body 1 has a double attractive effect: the traditional one generated by the effect of UV-A rays and the additional one generated by the effect of a ring of coloured visible light that surrounds the central beam of UV-A rays.

It may happen that depending on the environment in which the lighting body 1 is located, or depending on the time of use, the user needs to have a wider band of coloured visible light (it may in fact happen that in an environment or at a certain time band of the day, certain types of insects are present with greater density than at others).

By moving the lighting body 3 to any operating position between the first and the second position, the UV-A rays can be proportionally varied into coloured visible light in order to attract mainly the desired family of insects that shows up in the vicinity of the lighting body 1.

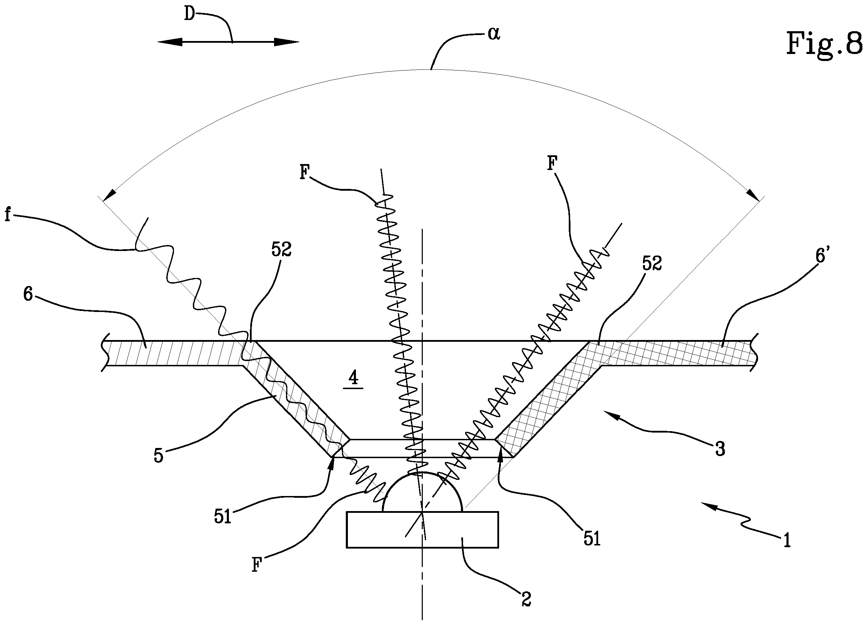

Figure 8 illustrates a third variant of the conveyor body of Figure 4.

The operating principle of the lighting body of Figure 8 is similar to that of Figures 6-7.

The lighting body 1, illustrated in Figure 8, has second sections 6 made of different materials.

In the variant of Figure 8, the conveyor body 3 has an axisymmetrical configuration, with respect to the axis of symmetry Y-Y, with a second section 6 divided into portions made of different materials. In this way, depending on the direction of movement of the conveyor body 3 along a direction D, it is possible to block the beam of UV-A rays with a different portion of the second section 6 of the conveyor body. In this way, depending on the portion of the second section 6, facing the LED 2, it is possible to promote a visible light of a different colour at the exit, transversely, from the second section 6.

The second section 6 can be made in one piece with the conveyor body 3 but of a different material, or it can be provided as an insert made of a different material with respect to the conveyor body 3 or it can be made through covers, of a different material, of the conveyor body 3.

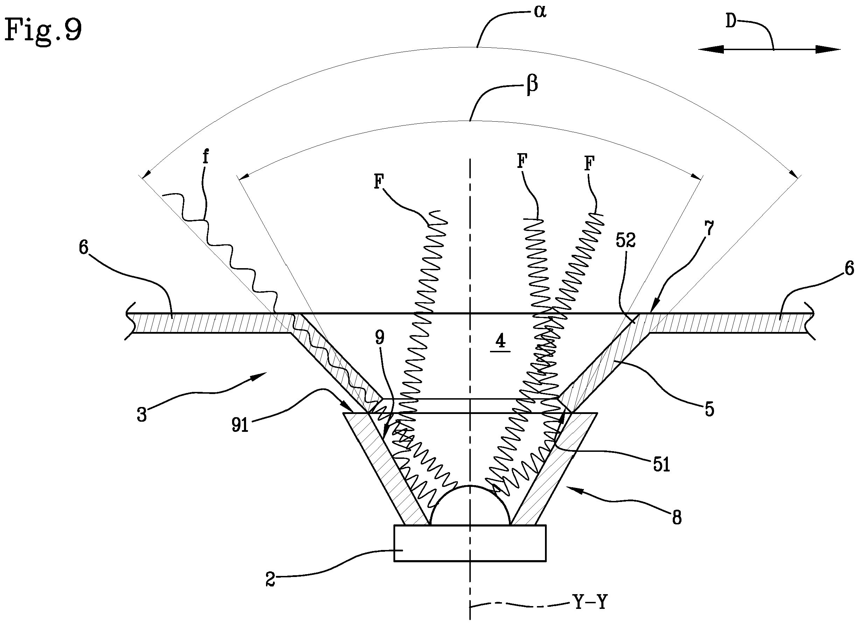

Figures 9-10 show a fourth variant of the second embodiment of the lighting body of Figure 4 in accordance with the present invention.

The conveyor body of Figures 9-10 differs from the previous ones in that it receives a greater portion of UV-A rays from a reflecting body 8.

The lighting body 1 has the conveyor body 3, with configuration similar to that described in the previous variants, cooperating with a reflecting body 8.

The reflecting body 8 is configured to reflect a portion of UV-A rays against the entry surface 51 and to direct a second portion of UV-A rays towards the centre of the beam of UV-A rays to increase the intensity of the beam. Intensity means a distance from which the beam of light can be identified, in particular the distance from which the insects are able to perceive, locate and follow the beam of light.

In particular, the reflecting body 8 has an aperture angle β smaller than the emission angle α of the LED 2. Preferably, the reflecting body 8 has an aperture angle β smaller than 120° (in the case in which the LED has an emission angle α of 120°). Even more preferably, the reflecting body, in the case of LEDs with an emission angle α of 120°, has an aperture angle β of 110°. The reflecting body 8 can be designed with different aperture angles β which in any case must satisfy the condition of being smaller than the emission angles α.

As illustrated in the appended Figure 9, the reflecting body 8 preferably has a hollow truncated cone shape and is fitted on the LED 2.

The LED 2 is placed in a base portion of the reflecting body 8, in particular inside the same. In other words, the reflecting body 8 extends away from the LED 2 defining a reflecting surface 9. The reflecting surface 9 receives a portion of the beam of rays emitted by the LED 2, in particular a first portion, and reflects it forward towards a central portion of the LED 2 itself. Through the reflecting surface 9 the UV-A rays emitted by the LED 2 bounce off on the reflecting body 8 until they are emitted outwards. In this way, the reflecting body 8 allows concentrating the beam of UV-A rays and projecting it away with respect to the lighting body 1, thus managing to attract insects even at great distances due to a greater intensity of the UV-A rays.

At the end of the reflecting surface 9, in a position away from the LED 2, the reflecting body 8 has a top 91.

The conveyor body 3 is located above the reflecting body 8 so that the entry surface 51 faces the reflecting surface 9.

In particular, the entry surface 51 of the first section 5 faces the inside of the reflecting surface 9 and in proximity to the top of the 91 of the reflecting body 8.

In other words, the conveyor body 3 is stacked above the reflecting body 8 so that the entry surface 51 is irradiated by a portion of the beam of UV-A rays emitted by the LED 2.

The entry surface 51 can be irradiated both directly by a portion of UV-A rays emitted by the LED 2 and by a portion of UV-A rays reflected by the reflecting body 8.

The location of the entry surface 51 of the first section 5 of the conveyor body 3 inside the reflecting surface 9 of the reflecting body 8 allows capturing a portion of UV-A rays emitted by the LED 2.

More specifically, a portion of UV-A rays is reflected by the reflecting body 8 against the entry surface 51.

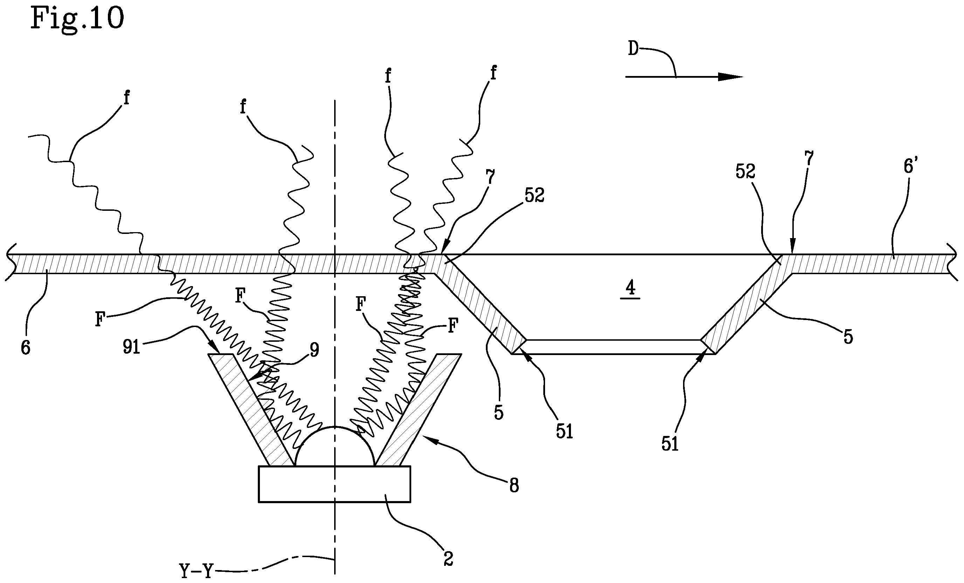

As is visible from Figure 10, the conveyor body can be movable along a direction D to be placed in a plurality of operating positions between the first one illustrated in Figure 9 and the second one illustrated in Figure 10. With this variant it is possible to move the conveyor body to assume a plurality of operating positions between the first and second position. In the operating positions that are intermediate to the first and second position, the beam of UV-A rays converted into coloured visible light is proportional to the quantity of UV-A rays blocked by the second section 6 of the conveyor body 3.

In the first position, a portion of UV-A rays, preferably central one, passes through the conveyor body 3 and the reflecting body 8 unperturbed, while a second portion of UV-A rays, preferably peripheral one, is partly reflected by the reflecting surface 8 towards the centre of the conveyor body, concentrating the brightness intensity of the central beam of UV-A rays, and partly channelled through the conveyor body 3 to exit the exit surface 52 as coloured visible light with a wavelength comprised between 380 and 780 nm.

Figure 10 illustrates the lighting body 1 in the second position. In this second position the conveyor body 3 is moved along a direction D so that the extension 6 intercepts all the flow of UV-A rays emitted by the LED 2.

In this second position, the whole beam of UV-A rays, emitted by LED 2, crosses the extension 6 transversely and exits through it, changing the wavelength and passing from a wavelength comprised between 360 and 370 nm to coloured visible light with a wavelength comprised between 380 and 780 nm.

In accordance with an embodiment not illustrated, the lighting body 1 comprises a plurality of conveyor bodies 3, made of materials that differ from each other (preferably with different chemical and/or physical properties) in such a way as to generate, when crossed by the beam of UV-A rays with a wavelength "F" comprised between 360 and 370 nanometres (nm), respective exiting radiations having at least partially different wavelength intervals comprised between 380 and 780 nanometres. These intervals can be completely distinct from each other or partially overlapped, provided that the visual effect of different tonality and/or colour obtained through each conveyor body 3 is in any case appreciable. Advantageously, the conveyor bodies 3 are interchangeable with each other so as to vary the luminous effect generated by the lighting body.

Preferably, only a sub-number of conveyor bodies 3 can be simultaneously mounted on the lighting body 1, for example a single conveyor body 3 at a time.

For this purpose, the conveyor bodies 3 have the same geometry so as to be interchangeable with each other, for example by means of quick or snap couplings or by means of fixing members (screws or equivalent).

Preferably, the different conveyor bodies 3 can be supplied as kits and used by the user according to the needs (for example according to the type of insects to be attracted, the positioning outdoors or indoors, day or night use and so on).

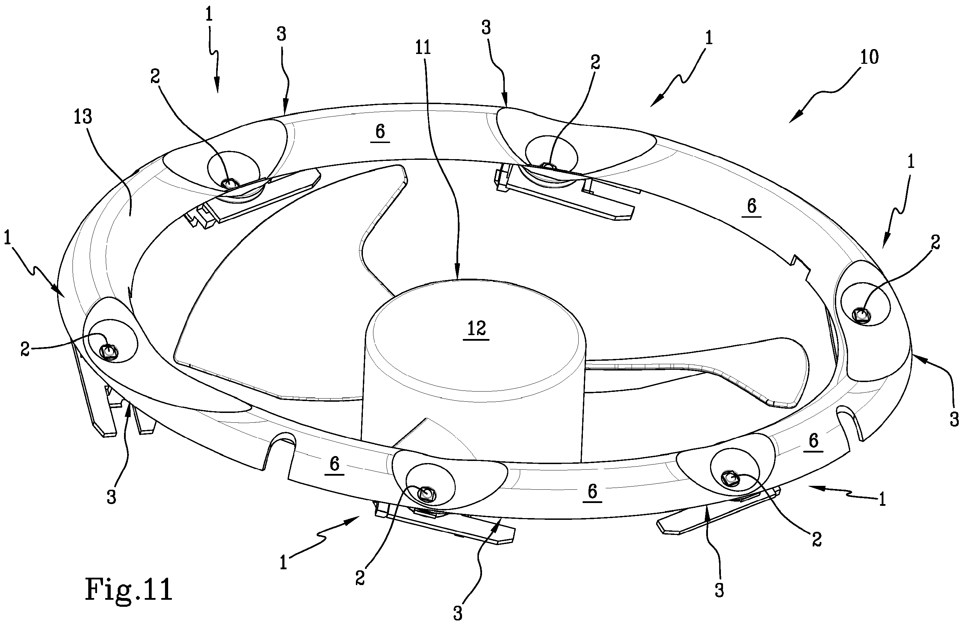

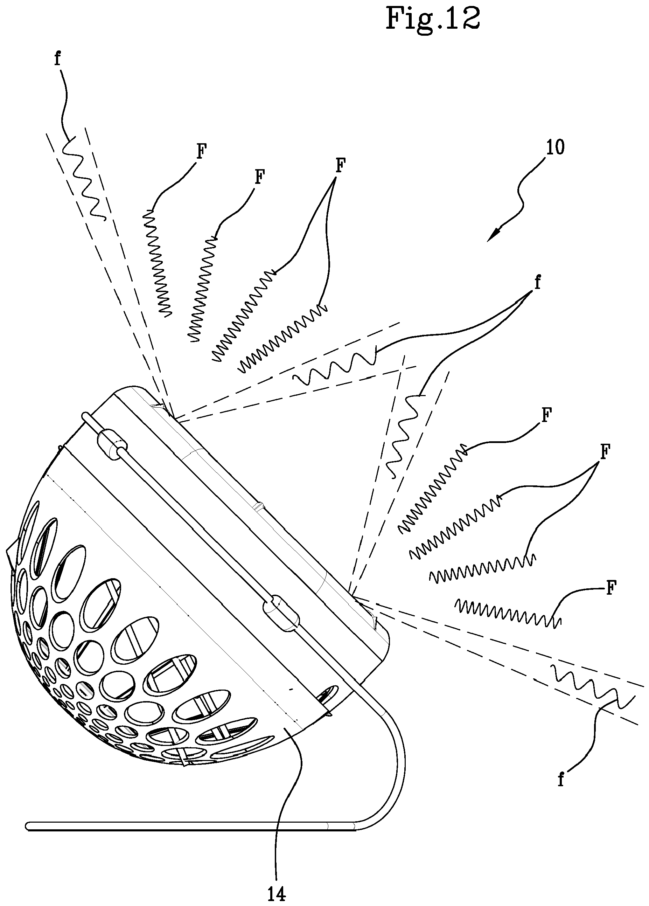

Figures 11 and 12 illustrate some components of the trap 10 while Figure 12 illustrates an example of the trap in its entirety.

As is visible in Figure 11, the trap preferably has six lighting bodies. Without departing from the scope of protection of the present invention, the minimum condition whereby the trap 10 can function is the presence of at least one lighting body.

The trap 10 has at least one lighting body 1 as described in the previous embodiments, together with an insect elimination means 11.

As is visible in Figure 11, each lighting body 1 has a respective conveyor 3 which in turn is provided with respective second sections 6. The second sections 6 are connected to each other to provide a main conveyor body 13. In the embodiment illustrated, the main conveyor body 13 has a ring shape.

Inside the main conveyor body 13 there is an insect elimination means 11 defined preferably by a fan 12.

The insect, attracted by the lighting body 1, rests on the main conveyor body 13 and, by effect of the rotation of the fan 12, is sucked into the fan and subsequently shredded by contact with the blades of the fan 12.

Said fan 12 is located in a centred position with respect to the plurality of lighting bodies 1, arranged radially around the fan 12.

As described in the variants of the lighting bodies, the main conveyor body 13 is movable.

By moving the main conveyor body 13 it is possible to vary the operating set-up of the trap 10.

In a first position, i.e. when all the conveyor bodies 3 are located in their respective first positions, the main conveyor body 13 has a plurality of conveyor bodies 3 located with the hollow central portion 4 facing the respective LED 2.

When the conveyor bodies 3 are located in the first position, the trap 10 emits a plurality of beams of UV-A rays which cross the hollow central portion 4 of each conveyor body.

The trap 10 emits a plurality of sources of UV-A rays equal to the number of conveyor bodies 3 associated with the trap 10.

The insects are attracted to the trap 10 by effect of the plurality of LEDs 2 which emits a plurality of point-like beams of UV-A rays with a wavelength comprised between 360 and 370 nm.

Due to the presence of each first section 5, a portion of beams of UV-A rays that is emitted by each LED exits from the conveyor body 3 perturbed in the form of coloured visible light with a wavelength comprised between 380 and 780 nm.

Basically, a plurality of rings of coloured visible light produced by the effect of the peripheral beam of UV-A rays passing through the first sections 5 of each conveyor body will be visible in the trap 10.

These coloured visible light rings have an attractive power towards insects which, excited by the vision of this light, fly towards the main conveyor body 13. By effect of the fan 12, which by rotating produces a small depression, the insect is sucked by the fan 12 and subsequently trapped inside a basket 14.

The cross section of the main conveyor body 13 has an arched profile so as to generate a sliding surface for the insects that settle on it.

Depending on the environment in which the trap 10 is located, it is possible to vary the position of the main conveyor body 13 reaching an operating position between the first position and the second position by effect of a rotation of the body 13 in one direction (clockwise or counterclockwise).

In this way it is possible to position each conveyor body so that the respective second sections 6 are positioned intercepting the beams of UV-A rays emitted by each LED 2.

Through the rotation of the main conveyor body 13, the trap 10 emits a greater portion of coloured visible light, adapted to intensify the attractive power towards a species of insects.

In a possible variant, not illustrated, instead of the fan 12, the trap 10 can provide an electrified mesh, adapted to electrify insects or adhesive paper on which they permanently stick.

Advantageously, the insect trap 1 object of the present invention is able to overcome the drawbacks which have emerged from the prior art. Advantageously, the insect trap 1 allows attracting insects more effectively.

In particular, by exploiting the conveyor body 3 it is possible to specifically attract more families of insects by adopting a single LED source.

This results in a low energy consumption and a wider capture efficiency compared to traditional traps that adopt a LED source capable of emitting UV-A rays at a single wavelength.

Thanks to the fact that the conveyor body can be interchangeable, the user can convert the use of the trap in different environments, infested by different insects, with no need to buy a dedicated or specific insect trap for the environment in which it is placed.

The use of the reflecting body allows attracting insects even from greater distances.

In addition, the insect trap 1 makes it possible to effectively trap insects and eliminate and confine them, avoiding annoyance for human beings, in particular avoiding the use of pesticides or other substances or means that may be excessively harmful and/or expensive.

Still the possibility of powering the trap only with a LED light source allows consuming very little energy and the possibility of being powered by batteries or small photovoltaic panels with no need to install the trap necessarily close to an electrical power source.

## Claims

1. A lighting body (1) for attracting insects, of the type comprising:
- at least one LED (2) configured to emit a cone-shaped beam of UV-A rays with an axis of symmetry (Y-Y), an aperture angle equal to the emission angle (α) and a wavelength (F) comprised between 360 and 370 nanometres (nm);
- a conveyor body (3), located in proximity to the LED (2) so that a portion of the body is passed through by a first portion of the beam of UV-A rays, comprising an entry surface (51), facing the LED (2), and an exit surface (52) set away from the LED (2);
**characterised in that** said conveyor body (3), is arranged and/or configured to intercept only a first portion of UV-A rays, leaving free a second portion of UV-A rays which does not pass through the conveyor body (3); wherein said conveyor body (3) is made of a material such that said first portion of UV-A rays, passing through the conveyor body (3), through the entry surface (51) and the exit surface (52) undergoes a wavelength change from an initial value comprised between 360 and 380 nanometres to a final value with a wavelength comprised between 380 and 780 nanometres corresponding to visible light.

2. The lighting body according to claim 1, wherein said conveyor (3) is movable from a first start-of-stroke position, in which the conveyor body (3) partially intercepts the beam of UV-A rays, converting it into coloured light with a wavelength comprised between 380 and 780 nanometres, to a second end-of-stroke position, in which the conveyor body (3) totally intercepts the beam of UV-A rays, converting the whole beam of UV-A rays emitted by the LED (2) into coloured visible light.

3. The lighting body according to claim 2, wherein said conveyor body (3) can assume, between the first position and the second position, a plurality of operating positions, each of which configured to vary the amount of UV-A rays converted into coloured visible light.

4. The lighting body according to any one of the preceding claims, wherein said conveyor body (3) comprises:
- a first section (5), having a preferably rectilinear and/or planar extension and more preferably inclined with respect to said axis of symmetry (Y-Y);
- a second section (6) extending the first section (5) and defining, with the first section (5), a change of inclination (7), preferably said second section (6) being perpendicular to said axis of symmetry (Y-Y).

5. The lighting body according to claim 4, wherein said first section (5) has a slab-like shape defining, within the beam of UV-A rays and at the exit surface (52), an area of coloured visible light.

6. The lighting body according to claims 2 and 4, wherein the second section (6) is external to the beam of UV-A rays when the conveyor body (3) is in the first position and/or the second section (6) blocks the passage of the beam of UV-A rays, when the conveyor body (3) is in the second position, promoting a total conversion of the entering light beam, transversely to the second section (6), into coloured visible light with a wavelength comprised between 380 and 780 nanometres, preferably the second section (6), when the conveyor body (3) assumes a position among the plurality of operating positions, partially blocks the beam of UV-A rays, promoting a partial conversion of the entering light beam, transversely to the second section (6), into coloured visible light with a wavelength comprised between 380 and 780 nanometres.

7. The lighting body according to any one of claims 4 to 6, wherein said second section (6) extends on at least two sides of the exit surface (52) so as to define at least one pair of second sections (6), at least one of the second sections belonging to the pair preferably being made of a material that is different from the material with which the first section (5) is made so as to promote a conversion of UV-A rays into coloured visible light that differs according to the location of the conveyor body (3) relative to the LED (2).

8. The lighting body according to any one of the preceding claims, wherein the conveyor body (3) has an annular or toroidal shape defining inside it a free space (4) so that the free space (4) is crossed by UV-A rays with an unchanged wavelength comprised between 360 and 380 nanometres while the annular conveyor body (3) is the seat of emission of coloured visible light exiting at the exit surface (52).

9. The lighting body according to any one of the preceding claims, wherein said conveyor body (3) is made of translucent or coloured plastic material, preferably polycarbonate.

10. The lighting body according to any one of the preceding claims, further comprising a reflecting body (8) configured to increase the visibility of said beam of UV-A rays emitted by the LED (2), having an aperture angle (β) that is smaller than the emission angle (α) and interposed between the LED (2) and conveyor body (3) so as to intercept, through a reflecting surface (9), a portion of UV-A rays and reflect it in part against the entry surface (51) and another portion of UV-A rays so as to concentrate it at the centre of the beam of UV-A rays, thus increasing the intensity of emission of the UV-A beam.

11. The lighting body according to claim 10, wherein said reflecting body (8) has a hollow truncated cone shape with an axis of symmetry coinciding with the axis (Y-Y) of the beam of UV-A rays; said reflecting surface (9) having a top (91) facing the entry surface (51) of the conveyor body (3).

12. An insect trap (10) of the type comprising- an insect elimination means (11) adapted to capture and kill the insects that arrive in proximity to the trap, **characterised in that** it comprises at least one the lighting body (1) according to one or more of the preceding claims, preferably said elimination means comprises a fan (12) and/or an electrified mesh and/or adhesive paper, each having the purpose of capturing and killing the insect that arrives in proximity to the elimination means (11) attracted by at least one lighting body (1).

13. The insect trap (10) according to claim 12, wherein at least one lighting body (1) has an extension (6) defining a main conveyor body (13), with a closed outline; said elimination means (11) being located inside the outline of the main conveyor body (13), preferably said main conveyor body (13) can be moved to position the respective conveyor bodies (3) in an operating position, thus varying the portion of UV-A rays intercepted and converting it into coloured visible light.

14. The lighting body (1) according to any one of the preceding claims, comprising a plurality of conveyor bodies (3), made of materials different from each other so as to generate, when crossed by said beam of UV-A rays with a wavelength (F) comprised between 360 and 370 nanometres (nm), respective exiting radiations having at least partially different wavelength intervals and comprised between 380 and 780 nanometres; wherein said conveyor bodies (3) are interchangeable with each other so as to vary the luminous effect generated by said lighting body (1), and wherein only a sub-number of said conveyor bodies (3) can be simultaneously mounted on the lighting body (1), preferably a single conveyor body (3).

15. The lighting body (1) according to claim 14, wherein said conveyor bodies (3) have the same geometry but different physical-chemical characteristics so as to be interchangeable with each other but to obtain different effects of change in the wavelength of the crossed radiation.
